# EUROPÄISCHE PATENTSCHRIFT

(11) **EP 2 290 269 B1**
(45) Veröffentlichungstag und Bekanntmachung des Hinweises auf die Patenterteilung: **06.07.2016**
(21) Anmeldenummer: 09010908.3
(22) Anmeldetag: 26.08.2009
(51) Int. Cl.: F16J 15/32

(54) **Dichtung**
Seal
Joint

(43) Veröffentlichungstag der Anmeldung: 02.03.2011
(73) Patentinhaber: Carl Freudenberg KG, 69469 Weinheim (DE)
(72) Erfinder: Bock, Eberhard, 69509 Mörlenbach (DE)

(56) Entgegenhaltungen:
- WO-A-80/01598
- WO-A-2007/014731
- DE-A1- 4 443 422
- DE-U1-202004 004 317
- JP-A- H10 169 786

## Beschreibung

### Technisches Gebiet

Die Erfindung betrifft eine Dichtung, umfassend einen Dichtabschnitt aus elastomerem Werkstoff, der unter elastischer Vorspannung dichtend an eine Gegenlauffläche anlegbar ist

### Stand der Technik

In der Dichtungstechnik sind Dichtungen, insbesondere Radialwellendichtringe aus elastomeren Werkstoffen seit langem bekannt. Dichtlippen, die elastomeren Werkstoffen, wie beispielsweise Butadienkautschuk oder Acrylat-Kautschuk weisen werkstoffbedingt eine gute Dichtwirkung auf. Liegt die Dichtlippe auf einer sich drehenden Welle auf, entwickelt sich durch eine Verzerrung der Oberfläche der aus dem elastomeren Werkstoff bestehenden Dichtlippe ein natürlicher Dichtungsmechanismus durch den das in den Dichtspalt zwischen Dichtlippe und Welle eingedrungene abzudichtende Medium in den abzudichtenden Raum zurückgepumpt wird siehe JP-H-10-169786 A Mit diesem Vorteil einhergehend weist eine aus elastomerem Werkstoff bestehende Dichtlippe gleichzeitig den Nachteil auf, dass zwischen Dichtlippe und Welle eine hohe Reibung herrscht, die mit erhöhten Energieverlusten verbunden ist Neben den Dichtungen mit elastomeren Dichtlippen sind auch solche mit Dichtlippen aus PTFE bekannt. PTFE ist ein teilkristalliner thermoplastischer Werkstoff der sich durch niedrigste Reibwerte auszeichnet. Dichtlippen aus PTFE sind jedoch stets mit einer meist nutförmigen Fördergeometrie versehen. Es ist jedoch auch bekannt, dass sich die Nuten im laufenden Betrieb durch Ablagerung von Ölkohle zusetzen können, wodurch sich die Förderwirkung und damit die Abdichtwirkung verschlechtert. Daher ist es beispielsweise aus der DE 101 28 776 A1 bekannt, eine aus PTFE bestehende und mit einer Fördergeometrie versehende Dichtlippe mit einer reibungsreduzierenden Beschichtung zu versehen, wobei die Beschichtung nicht die Reibung zwischen der Welle und der Dichtlippe reduziert, sondern durch die Reibungsreduzierung die Anlagerung von Ölkohle innerhalb der Nuten zu verhindern.

Bislang wurden Dichtlippen aus elastomeren Werkstoffen nicht mit einer reibungsreduzierenden Beschichtung versehen, weil es aufgrund der Reibungsreduzierung zu einer Abnahme der Verzerrung der Oberfläche der Dichtlippe kommt und dadurch die Dichtfunktion reduziert oder gar außer Kraft gesetzt wird.

### Darstellung der Erfindung

Der Erfindung liegt die Aufgabe zugrunde, die Dichtlippe so weiterzuentwickeln, dass bei gleichbleibender Dichtwirkung die Reibung der Dichtlippe an der abzudichtenden Welle reduziert ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist der Dichtabschnitt mit einer reibungsreduzierenden Beschichtung und mit einer Struktur zur Verbesserung der Dichtfunktion versehen. Die reibungsreduzierende Beschichtung bewirkt eine Reduzierung der Reibung zwischen der Dichtlippe und der abzudichtenden Welle, wodurch sich der Energieverlust innerhalb des Aggregates in dem die Dichtung eingesetzt ist ebenfalls reduziert. Die Abnahme der Dichtwirkung aufgrund der Abnahme der Verzerrung der Oberfläche wird durch die Struktur zur Verbesserung der Dichtwirkung kompensiert, so dass die Dichtung im Ergebnis bei gleichbleibender Dichtwirkung eine reduzierte Reibung aufweist. Dabei ist die Struktur bevorzugt makroskopisch ausgebildet. Es ist bekannt, dass sich im laufenden Betrieb aufgrund der Reibung zwischen der Welle und der Dichtlippe in dem Kontaktbereich der Dichtlippe mikroskopische Strukturen, insbesondere Riefen und Rillen, ausbilden. Diese mikroskopischen Strukturen verbessern die Pumpwirkung der Dichtlippe und erhöhen dadurch die Dichtwirkung der Dichtlippe. Durch die reibungsreduzierende Beschichtung können sich diese mikroskopischen Strukturen nicht ausbilden. Der vorteilhafte Effekt dieser mikroskopischen Strukturen wird jedoch durch die makroskopischen Strukturen ausgeglichen. Dabei haben die makroskopischen Strukturen insbesondere den Vorteil, dass deren Wirkung von vornherein zur Verfügung steht und sich nicht erst im laufenden Betrieb ausbilden muss.

Die Struktur kann als Fördergeometrie ausgebildet sein. Eine Fördergeometrie zeichnet sich dadurch aus, dass in die Dichtlippe solche makroskopische Strukturen eingeprägt werden, die im laufenden Betrieb in den Dichtspalt eindringendes Medium in den abzudichtenden Raum zurückfördern. Die Fördergeometrie kann dazu in verschiedenen Ausgestaltungen realisiert werden.

In einer Ausgestaltung kann die Fördergemetrie Drallstrukturen aufweisen. Drallstege weisen Vorsprünge auf, die aus der Dichtlippe herausragen und beispielsweise eine sichelförmige Gestalt aufweisen können. Dabei können die Vorsprünge so angeordnet sein, dass sich eine bevorzugte Drehrichtung mit erhöhter Pumpwirkung ergibt oder die Vorsprünge können so angeordnet sein, dass die Pumpwirkung in beiden Drehrichtungen gleich ist. Die Drallstruktur kann auch Drallstege umfassen, die in oder entgegen der Richtung des abzudichtenden Raums weisend von der Dichtlippe abstehen. Eine Drallstruktur ist meist so ausgebildet, dass sie auf der Luftseite der Dichtkante, also der dem abzudichtenden Raum abgewandten Seite, angebracht ist und Fluid, das durch den Dichtspalt hindurch nach außen dringt, in den abzudichtenden Raum zurück pumpt

Die Fördergeometrie kann als Fördergewinde ausgebildet sein. Ein Fördergewinde umfasst eine oder mehrere spiralförmige in der Dichtlippe angeordnete Nuten. In diesen wird das abzudichtende Medium im laufenden Betrieb durch hydrodynamische Vorgänge in Richtung des abzudichtenden Raumes gepumpt.

Die Fördergeometrie kann zumindest eine wellenförmige Dichtkante umfassen. Dabei liegt die Dichtkante nicht kreisförmig auf der abzudichtenden Welle auf, sondern umschließt die Welle geschlossen wellenförmig. Auch bei dieser Struktur wird das abzudichtende Medium im laufenden Betrieb durch hydrodynamische Vorgänge in Richtung des abzudichtenden Raumes gepumpt. Zur Verbesserung der Dichtwirkung dieser Struktur können zumindest zwei sich überschneidende oder hintereinander angeordnete wellenförmige Dichtkanten vorgesehen sind.

Die Beschichtung kann als Hartstoff ausgebildet sein. Eine Hartstoffbeschichtung bildet eine verschleißarme und korrosionsfeste Oberfläche mit hervorragenden Gleiteigenschaften und eignet sich dabei sehr gut für Anwendungen in der Dichtungstechnik zur Abdichtung relativ zueinander bewegter Maschinenelemente. Dabei bestehen Hartstoffbeschichtungen meist aus metallischen Werkstoffen wie Hartchrom, aus keramischen Werkstoffen, aus Sintermaterialien. Bei Dichtungen aus elastomeren Werkstoffen kommen auch Hartstoffbeschichtung aus Kunststoff wie PTFE in Betracht. Eine Beschichtung aus PTFE bildet eine Polymerschicht, wobei PTFE einen besonders niedrigen Reibwert aufweist und insbesondere bei Anwendungen in der Dichtungstechnik sehr verschleißfest ist.

Die Beschichtung kann eine Diamond-Like-Carbon Beschichtung sein. Diamond-Like-Carbon Beschichtungen, auch als DLC-Beschichtungen bezeichnet, weisen eine hohe Härte und damit eine hohe Verschleißfestigkeit auf. Des Weiteren weisen DLC-Beschichtungen günstige Reibungseigenschaften auf. Des Weiteren ist von Vorteil, dass DLC-Beschichtungen eine geringere Sprödigkeit aufweisen als andere Hartstoffbeschichtungen und dabei beinahe polymerartige Eigenschaften aufweisen kann. Dadurch sind DLC-Beschichtungen insbesondere zur Beschichtung von elastisch deformierbaren Dichtlippen geeignet. DLC-Beschichtungen können auf verschiedene Art und Weise auf die Dichtlippe aufgebracht werden. Die physikalischen Abscheidung aus der Gasphase, auch als PVD bezeichnet, ist ein vakuumbasierte Beschichtungsverfahren bei dem die Schicht direkt durch Kondensation eines Materialdampfes des Ausgangsmaterials auf der Dichtlippe gebildet wird. Ein weiteres Verfahren ist die chemische Gasphasenabscheidung, auch als CVD bezeichnet. Dabei wird an der erhitzten Oberfläche der Dichtlippe aufgrund einer chemischen Reaktion aus der Gasphase eine Feststoffkomponente abgeschieden. Ein weiteres chemisches Verfahren ist die Plasmapolymerisation. Bei diesem Verfahren werden die dampfförmigen Verbindungen zunächst durch ein Plasma aktiviert. Eine DLC-Beschichtung ist sehr haltbar.

Die Beschichtung kann als Gleitlack ausgebildet sein. Gleitlacke enthalten einen Festschmierstoff wie PTFE, Molybdänsulfid oder Grafit, ein Bindemittel, beispielsweise ein organisches oder anorganisches Harz und ein Lösemittel. Des Weiteren können Gleitlacke Füllstoffe und Additive enthalten. Nach dem Auftragen und Aushärten des Gleitlacks ergibt sich eine Beschichtung die wie ein Trockenschmierstoff wirkt Bei Reibungsbeanspruchung kommt es zu einem schrittweisen Übertrag oder Abtrag der Gleitlackschicht. Daher ist die Lebensdauer einer Gleitlackschicht begrenzt. Eine Gleitlackbeschichtung ist kostengünstig.

Eine Anordnung könnte eine Dichtung der hier beschriebenen Art und eine Gegenlauffläche umfassen, welche als abzudichtendes Maschinenelement ausgestaltet ist. Das abzudichtende Maschinenelement kann vorzugsweise als Welle ausgestaltet sein. Hierdurch kann die Dichtung vorteilhaft als Radialwellendichtring verwendet werden.

Eine Anordnung könnte eine Dichtung der hier beschriebenen Art und eine Gegenlauffläche umfassen, die als Laufhülse einer Kassettendichtung ausgestaltet ist. Vorteilhaft ist die Anordnung als Kassettendichtung ausgestaltet.

Vor diesem Hintergrund könnte die Dichtung einen ersten Dichtabschnitt und einen zweiten Dichtabschnitt aufweisen, welche an der Laufhülse anliegen. Hierdurch werden zwei Dichtflanken geschaffen.

### Kurzbeschreibung der Zeichnung

Einige Ausführungsbeispiele der erfindungsgemäßen Dichtung werden nachfolgend anhand der Figuren näher erläutert. Diese zeigen, jeweils schematisch:
- Fig. 1: einen federlosen Radialwellendichtring mit einer gewindeförmigen Fördergeometrie;
- Fig. 2: einen Radialwellendichtring mit Drallstegen;
- Fig. 3: einen Dichtring mit einer ondulierten Dichtkante;
- Fig. 4: einen Dichtring mit sich überschneidenden Dichtkanten; und
- Fig. 5: eine Kassettendichtung.

### Ausführung der Erfindung

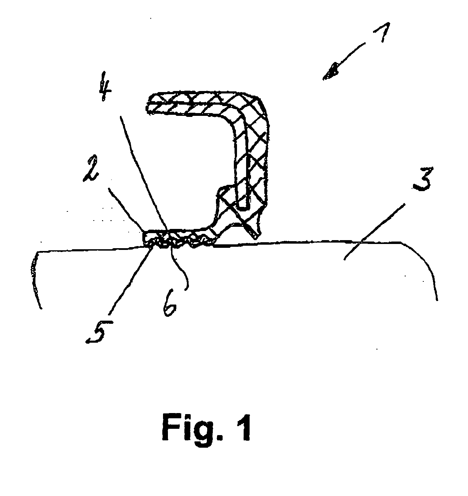

Figur 1 zeigt eine Dichtung 1, hier einen Radialwellendichtring, umfassend einen Dichtabschnitt 2 aus Acrylat-Kautschuk. Der Dichtabschnitt 2 kann auch aus einem anderen elastomeren Werkstoff gefertigt sein. Der Dichtabschnitt 2 ist unter elastischer Vorspannung dichtend an ein abzudichtendes Maschinenelement 3 anlegbar, wobei diese Ausgestaltung keine Ringwendelfeder aufweist und die radiale Anpressung bei drucklosem Einsatz allein durch die Rückstellkraft der elastisch verformten Dichtlippe erzeugt wird. Zur Verbesserung der Dichtfunktion ist der Dichtabschnitt 2 mit einer Struktur 5 versehen. Diese Struktur 5 ist eine makroskopische Struktur und ist als Fördergeometrie 6, genauer als Fördergewinde ausgebildet. Des Weiteren ist der Dichtabschnitt 2 mit einer reibungsreduzierenden Beschichtung 4 versehen. Die Beschichtung ist in dieser Ausgestaltung eine Hartstoffbeschichtung, gebildet durch eine DLC-Beschichtung, die mittels PVD aufgetragen wurde.

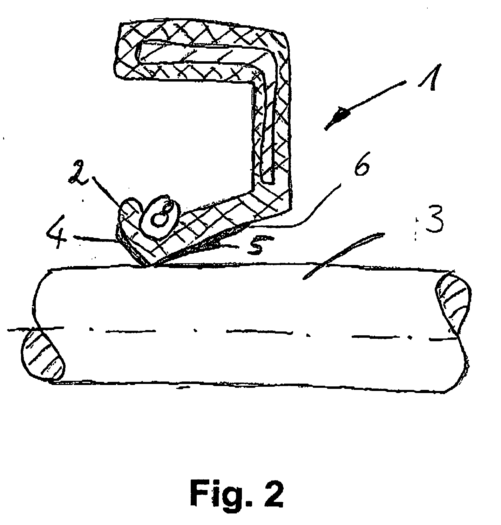

Figur 2 zeigt eine Dichtung 1, hier einen Radialwellendichtring, umfassend einen Dichtabschnitt 2 aus Butadienkautschuk. Der Dichtabschnitt 2 kann auch aus Acrylat-Kautschuk oder aus einem anderen elastomeren Werkstoff gefertigt sein. Der Dichtabschnitt 2 ist unter elastischer Vorspannung dichtend an ein abzudichtendes Maschinenelement 3 anlegbar, wobei diese Ausgestaltung eine Ringwendelfeder aufweist, die die radiale Anpressung erhöht. Zur Verbesserung der Dichtfunktion ist der Dichtabschnitt 2 mit einer Struktur 5 versehen. Diese Struktur 5 ist eine makroskopische und durch eine Anzahl über den Umfang verteilter Drallstege gebildet. Die Drallstege können radial abragen oder in eine Drehrichtung abgebogen sein. Derartige abragend ausgebildete Drallstege weisen eine Vorzugsdrehrichtung auf. Es ist auch denkbar, die Drallstege abwechseind abzubiegen. Dabei ergibt sich eine zickzackförmige Anordnung der Drallstege. Diese weisen keine Vorzugsdrehrichtung auf und werden auch als Wechseldrall bezeichnet. Die Drallstege bilden die Fördergeometrie 6. Des Weiteren ist der Dichtabschnitt 2 mit einer reibungsreduzierenden Beschichtung 4 versehen. Die Beschichtung ist in dieser Ausgestaltung eine Hartstoffbeschichtung, gebildet durch einen Gleitlack.

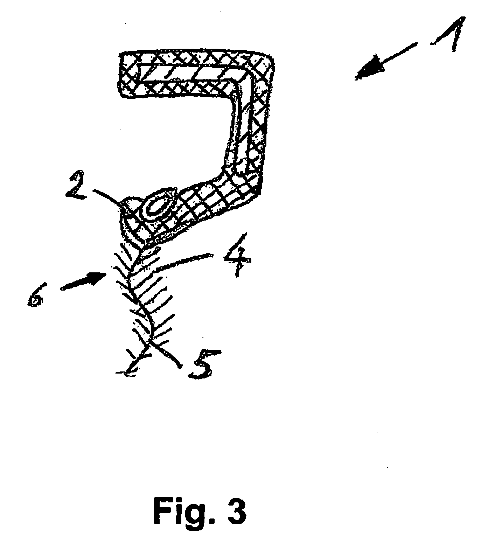

Figur 3 zeigt eine Dichtung 1, umfassend einen Dichtabschnitt 2 aus Fluorkautschuk. Der Dichtabschnitt 2 kann auch aus einem Acrylat-Kautschuk oder einem anderen elastomeren Werkstoff gefertigt sein. Der Dichtabschnitt 2 ist unter elastischer Vorspannung dichtend an ein abzudichtendes Maschinenelement 3 anlegbar. Zur Verbesserung der Dichtfunktion ist der Dichtabschnitt 2 mit einer Struktur 5 versehen. Diese Struktur 5 ist eine makroskopische und durch eine wellenförmige Dichtkante gebildet. Diese bildet die Fördergeometrie 6. Des Weiteren ist der Dichtabschnitt 2 mit einer reibungsreduzierenden Beschichtung 4 versehen. Die Beschichtung ist in dieser Ausgestaltung eine Polymerbeschichtung, gebildet durch einen Überzug aus PTFE.

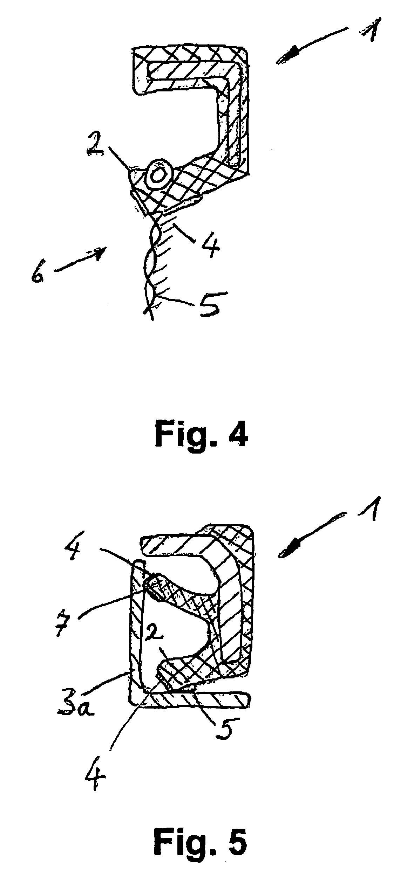

Figur 4 zeigt eine Dichtung 1 gemäß Figur 3, wobei die Dichtung 1 in dieser Ausgestaltung zwei sich überschneidende Dichtkanten aufweist.

Figur 5 zeigt eine Dichtung 1, welche als Radlager-Dichtungskassette mit integriertem Radialwellendichtring ausgestaltet ist. Die Dichtung 1 umfasst einen Dichtabschnitt 2 aus Fluorkautschuk, Der Dichtabschnitt 2 kann auch aus einem anderen elastomeren Werkstoff gefertigt sein. Der Dichtabschnitt 2 ist unter elastischer Vorspannung dichtend an die Laufhülse 3a der Kassette anlegbar. Zur Verbesserung der Dichtfunktion ist der Dichtabschnitt 2 mit einer Struktur 5 versehen, in diesem Fall mit Drallstegen. Ein zweiter Dichtabschnitt 7 liegt axial an der Laufhülse 3a der Kassette an. Sowohl der erste Dichtabschnitt 2 als auch der zweite Dichtabschnitt 7 sind jeweils mit einer reibungsreduzierenden Beschichtung 4 versehen. Die Beschichtung 4 ist in dieser Ausgestaltung eine Hartstoffbeschichtung, gebildet durch eine DLC-Beschichtung, die mittels PVD aufgetragen wurde.

## Patentansprüche

1. Dichtung (1), umfassend einen Dichtabschnitt (2) aus elastomerem Werkstoff, der unter elastischer Vorspannung dichtend an eine Gegenlauffläche anlegbar ist, wobei der Dichtabschnitt (2) mit einer reibungsreduzierenden Beschichtung (4) versehen ist und dass der Dichtabschnitt (2) mit einer Struktur (5) zur Verbesserung der Dichtfunktion versehen ist, **dadurch gekennzeichnet, dass** die Beschichtung eine Diamond Like Carbon Beschichtung ist und/oder mittels Plasmapolymerisation hergestellt wurde.

2. Dichtung nach Anspruch 1, **dadurch gekennzeichnet, dass** die Struktur (5) makroskopisch ausgebildet ist.

3. Dichtung nach Anspruch 1 oder 2, **dadurch gekennzeichnet, dass** die Struktur (5) als Fördergeometrie (6) ausgebildet ist.

4. Dichtung nach Anspruch 3, **dadurch gekennzeichnet, dass** die Fördergeometrie (6) Drallstrukturen aufweist.

5. Dichtung nach Anspruch 4, **dadurch gekennzeichnet, dass** die Fördergeometrie (6) Drallstege aufweist.

6. Dichtung nach Anspruch 5, **dadurch gekennzeichnet, dass** die Fördergeometrie (6) als Fördergewinde ausgebildet ist.

7. Dichtung nach Anspruch 3, **dadurch gekennzeichnet, dass** die Fördergeometrie (6) zumindest eine wellenförmige Dichtkante umfasst.

8. Dichtung nach Anspruch 7, **dadurch gekennzeichnet, dass** zumindest zwei sich überschneidende oder hintereinander angeordnete wellenförmige Dichtkanten vorgesehen sind.

9. Anordnung, umfassend eine Dichtung (1) nach einem der Ansprüche 1 bis 8 und eine Gegenlauffläche, welche als abzudichtendes Maschinenelement (3) ausgestaltet ist.

10. Anordnung, umfassend eine Dichtung (1) nach einem der Ansprüche 1 bis 9 und eine Gegenlauffläche, die als Laufhülse (3a) einer Kassettendichtung ausgestaltet ist.

11. Anordnung nach Anspruch 10, **dadurch gekennzeichnet, dass** die Dichtung (1) einen ersten Dichtabschnitt (2) und einen zweiten Dichtabschnitt (7) aufweist, welche an der Laufhülse (3a) anliegen.

## Claims

1. Seal (1), comprising a sealing section (2) which is made from elastomeric material and can bear sealingly under elastic prestress against a corresponding running face, the sealing section (2) being provided with a friction-reducing coating (4), and the sealing section (2) being provided with a structure (5) for improving the sealing function, **characterized in that** the coating is a diamond-like carbon coating and/or has been produced by means of plasma polymerization.

2. Seal according to Claim 1, **characterized in that** the structure (5) is of macroscopic configuration.

3. Seal according to Claim 1 or 2, **characterized in that** the structure (5) is configured as a conveying geometry (6).

4. Seal according to Claim 3, **characterized in that** the conveying geometry (6) has spiral structures.

5. Seal according to Claim 4, **characterised in that** the conveying geometry (6) has spiral webs.

6. Seal according to Claim 5, **characterized in that** the conveying geometry (6) is configured as a conveying screw.

7. Seal according to Claim 3, **characterized in that** the conveying geometry (6) comprises at least one undulating sealing edge.

8. Seal according to Claim 7, **characterized in that** at least two undulating sealing edges are provided which intersect one another or are arranged behind one another.

9. Arrangement, comprising a seal (1) according to one of Claims 1 to 8 and a corresponding running face which is configured as a machine element (3) to be sealed.

10. Arrangement, comprising a seal (1) according to one of Claims 1 to 9 and a corresponding running face which is configured as a running sleeve (3a) of a cassette seal.

11. Arrangement according to Claim 10, **characterized in that** the seal (1) has a first sealing section (2) and a second sealing section (7) which bear against the running sleeve (3a).

## Revendications

1. Joint d'étanchéité (1) comportant une section d'étanchéité (2) en un matériau élastomère qui peut être appliqué de manière étanche contre une surface complémentaire de déplacement par application d'une précontrainte élastique, la section d'étanchéité (2) étant dotée d'un revêtement (4) réduisant le frottement et la section d'étanchéité (2) étant dotée d'une structure (5) qui améliore la fonction d'étanchéité, **caractérisé en ce que**
le revêtement est un revêtement en carbone de type diamant et/ou est réalisé par polymérisation sous plasma.

2. Joint d'étanchéité selon la revendication 1, **caractérisé en ce que** la structure (5) est macroscopique.

3. Joint d'étanchéité selon les revendications 1 ou 2, **caractérisé en ce que** la structure (5) est configurée comme géométrie de transport (6).

4. Joint d'étanchéité selon la revendication 3, **caractérisé en ce que** la géométrie de transport (6) présente des structures de torsion.

5. Joint d'étanchéité selon la revendication 4, **caractérisé en ce que** la géométrie de transport (6) présente des nervures de torsion.

6. Joint d'étanchéité selon la revendication 5, **caractérisé en ce que** la géométrie de transport (6) est configurée comme filet de transport.

7. Joint d'étanchéité selon la revendication 3, **caractérisé en ce que** la géométrie de transport (6) comporte au moins un bord d'étanchéité ondulé.

8. Joint d'étanchéité selon la revendication 7, **caractérisé en ce qu'**au moins deux chants d'étanchéité ondulés se croisant ou disposés l'un derrière l'autre sont prévus.

9. Ensemble comprenant un joint d'étanchéité (1) selon l'une des revendications 1 à 8 et une surface complémentaire de déplacement configurée comme élément de machine (3) qui doit être rendu étanche.

10. Ensemble comprenant un joint d'étanchéité (1) selon l'une des revendications 1 à 9 et une surface complémentaire de déplacement configurée comme chemise de déplacement (3a) d'un joint d'étanchéité à cassette.

11. Ensemble selon la revendication 10, **caractérisé en ce que** le joint d'étanchéité (1) présente une première section d'étanchéité (2) et une deuxième section d'étanchéité (7) qui reposent contre la chemise de déplacement (3a).
